# EUROPÄISCHE PATENTSCHRIFT

(11) **EP 1 850 092 B1**
(45) Veröffentlichungstag und Bekanntmachung des Hinweises auf die Patenterteilung: **08.11.2017**
(21) Anmeldenummer: 06008590.9
(22) Anmeldetag: 26.04.2006
(51) Int. Cl.: G06F 17/30

(54) **Verfahren zur Auswahl eines Musikstücks**
Method for selecting a piece of music
Procédé destiné à la sélection d'une pièce de musique

(43) Veröffentlichungstag der Anmeldung: 31.10.2007
(73) Patentinhaber: Bayerische Motoren Werke Aktiengesellschaft, 80809 München (DE)
(72) Erfinder: Rölle, Christopher, 80809 München (DE); Pitz, Michael, 80922 München (DE); Broy, Verena, 80336 München (DE)

(56) Entgegenhaltungen:
- EP-A- 1 587 003
- EP-A2- 1 122 633
- WO-A1-2006/040710
- DE-A1- 4 033 829
- DE-A1- 10 339 195
- US-A1- 2003 048 309
- US-A1- 2006 071 918

## Beschreibung

Die Erfindung betrifft ein Verfahren zur Auswahl eines Datensatzes aus einer Vielzahl von Datensätzen, die in einer mit einer Recheneinheit verbundenen Speichereinheit abgelegt sind, bei welchem mittels eines mit der Recheneinheit verbundenen Bedienelements zumindest ein Teil der Datensätze anhand von Auswahlobjekten auswählbar ist, welche die Datensätze repräsentieren und durch eine mit der Recheneinheit verbundene graphische Anzeigeeinheit ausgegeben werden, wobei einem Bediener der Recheneinheit durch die Anzeigeeinheit eine landkartenähnliche Struktur dargestellt wird, in welche zumindest ein Teil der Auswahlobjekte eingebettet ist.

Solche Verfahren sind insbesondere zur Auswahl von Musiktiteln bekannt. Dabei werden die in einem Musikarchiv enthaltenen Musiktitel über so genannte MusicMaps visualisiert. Bei den meisten bekannten Verfahren dieser Art werden bestimmte Charakteristika der Musikstücke oder Ihrer Interpreten dazu genutzt, eine räumliche Beziehung unter den zu den Datensätzen gehörigen Auswahlobjekten aufzubauen und dadurch die Position der Auswahlobjekte in der landkartenähnlichen Struktur festzulegen.

*MusicMap (http:*//*www.music-map.com)* ist ein im Internet verfügbares Interface zur Lokalisierung von Musikinterpreten, die in einer graphischen Anzeige in einer zweidimensionalen Verteilung entsprechend ihrer musikalischen Distanz zu anderen Musikinterpreten angezeigt werden. Die graphische Darstellung der sich ergebenden Struktur erfolgt zweidimensional und textbasiert. Die Positionierung der Musikinterpreten innerhalb der Struktur wird anhand empirisch gesammelter Daten vorgenommen. Ein ähnliches, graphisch aufwändiger dargebotenes Musikarchiv stellt *Liveplasma (http:*//*www.liveplasma.com)* dar.

Bekannt ist auch die Visualisierung eines Musikarchivs durch eine landkartenähnliche Struktur anhand der musikalischen Ähnlichkeit der einzelnen Musikstücke. Dabei kann ein "Fingerabdruck" jedes Liedes erstellt werden, um es anhand der Frequenzen oder anderer durch Signalverarbeitung bestimmbarer Merkmale einem musikalischen Genre zuzuordnen und so die Position auf der landkartenähnlichen Struktur zu bestimmen. Ein Beispiel stellt das Projekt *MusicMiner (http:*//*musicminer.sourceforge.net)* dar. Das angebotene Computerprogramm erlaubt neben der Darstellung der Musikstücke in der landkartenähnlichen Struktur auch die Verwaltung und das Abspielen von Musikstücken des Musikarchivs.

Die Bedienung der aus dem Stand der Technik bekannten Verfahren zur Organisation eine Musikarchivs anhand einer landkartenähnlichen Struktur setzt in der Regel einen Computer-Arbeitsplatz mit Internet-Zugang voraus. Die unmittelbare Interaktion erfolgt über typische Ein- und Ausgabemedien (Mouse, Tastatur, Bildschirm) eines Computer-Arbeitsplatzes. Der Anwendungsbereich solcher Verfahren ist daher beschränkt.

Einige der aus dem Stand der Technik bekannten Verfahren, die in der beschriebenen Art und Weise auf einer Landkartenmetapher basieren, generieren die Positionen der einzelnen Musikstücke in der landkartenähnlichen Struktur anhand ihrer akustischen Ähnlichkeiten. Die Granularität der generierten Landkarte ist dabei jedoch meist sehr fein. Es ergibt sich somit kaum eine helfende Struktur. Der Bediener wird nicht bei der Bildung eines mentalen Modells unterstützt.

Die zur Darstellung verwendeten Landkartenmodelle dienen bei den bekannten Verfahren zudem lediglich als Repräsentationsform. Das Potenzial der Landkartenmetapher zur Unterstützung des Bedieners wird nicht in vollem Maße ausgenutzt. Die Interaktionsmöglichkeiten zwischen Bediener und Landkarte sind meist sehr beschränkt. Die Landkarte dient oft mehr als Anzeigefläche bzw. Bildschirmhintergrund denn als Interface.

Die oben beschriebenen bekannten Verfahren beziehen sich ausnahmslos auf die Organisation und Auswahl von Musikarchiven. Als vergleichbare Verfahren zur Organisation und zur Auswahl von Datensätzen sind aus dem Stand der Technik so genannte Newsmaps bekannt. Für diese gelten jedoch ebenfalls die in den vorangehenden Abschnitten genannten Einschränkungen und Nachteile.

Das Dokument DE 40 33 829 A1 offenbart eine Dienstleistungs-Informationseinrichtung für ein Kraftfahrzeug, welche geeignet ist, auf einer Landkarte die Standorte von Betrieben, die Dienstleistungen anbieten, sowie gegebenenfalls weitere dienstleistungsbezogene, von einem Benutzer angeforderte Informationen anzuzeigen.

Das Dokument US 2003/0048309 A1 offenbart eine Bedienschnittstelle für ein Multimedia-System in einem Kraftfahrzeug, bei dem ausgehend von einem Hauptmenü Untermenüs, z.B. für Filme oder Musikstücke auswählbar sind. Im Hauptmenü sind auswählbare Symbole für einzelne Untermenüs auf einem Kreisausschnitt angeordnet. In den Untermenüs sind auswählbare Symbole für einzelne Filme auf einem Kreisausschnitt angeordnet.

Das Dokument DE 103 39 195 A1 offenbart ein Navigationsgerät mit einer Anzeigeeinheit, gefertigt aus elektronischem Papier, einem Empfänger für ein Positionierungssystem, einer Eingabeeinheit, einer zentralen Recheneinheit und einer Speichereinheit. Das Navigationsgerät kann zur Anzeige von Landkarten und/oder photographischen Aufnahmen dienen. Bei den anzuzeigenden Landkarten kann es sich um topographische Karten, Wanderkarten, Stadtpläne, Strassenkarten, Lagepläne, Pläne von künstlich angelegtem Gelände oder Pläne von Innenräumen von Bauwerken handeln. Bei den photographischen Aufnahmen kann es sich um Luftaufnahmen oder Satellitenaufnahmen handeln. Auch geographische Punkte von Interesse können durch Markierungen auf einer angezeigten Karte angezeigt werden.

Eine Vorrichtung und ein Verfahren zur Liedersuche offenbart EP 1 587 003 A2. Dabei ist vorgesehen, eine Mehrzahl von Liedern anhand bestimmter Eigenschaften automatisiert in einer zweidimensionalen Liederkarte anzuordnen.

US 2006/0071918 A1 offenbart ein Eingabegerät zur verbesserten Auswahl von Datensätzen aus großen Datenmengen. Dabei können auf einer Anzeigefläche des Eingabegeräts auch Musikstücke in Form einer Musikkarte dargestellt und ausgewählt werden.

WO 2006/040710 A1 lehrt eine Vorrichtung und ein Verfahren zur visuellen Erstellung einer Playlist. Dabei können Musikstücke nach unterschiedlichen Kriterien zusammengestellt und grafisch auf einer Karte darstellt werden. Indem ein Pfad auf der Karte definiert wird, kann eine Playlist erstellt werden, die die gewünschte Musik enthält.

EP 1 122 633 A2 betrifft eine Vorrichtung zur Steuerung einer Bildschirmanzeige. Mittels eines Betätigungsglieds, welches eine Ausgangslage besitzt und gegen die Wirkung eines elastischen Elements eine Bewegung in zumindest zwei Freiheitsgraden durchführen kann sowie um eine Längsachse drehbar und in Richtung der Längsachse bewegbar ist, wird eine schnelle Anwahl von Menüpunkten der Bildschirmanzeige ermöglicht.

Aufgabe der Erfindung ist es, ein Verfahren zu schaffen, durch welches das Prinzip der Organisation von Daten in landkartenähnlichen Strukturen in verbesserter Art und Weise nutzbar gemacht wird.

Diese Aufgabe wird erfindungsgemäß gelöst durch ein Verfahren gemäß Patentanspruch 1. Bevorzugte Ausführungsformen und vorteilhafte Weiterbildungen ergeben sich aus den abhängigen Patentansprüchen.

Erfindungsgemäß wird also bei Anwendung eines Verfahrens der eingangs genannten Gattung in einem Kraftfahrzeug zur Bedienung des Verfahrens ein Bedienelement des Kraftfahrzeugs verwendet, welches wahlweise auch zur Bedienung eines Fahrerinformationssystems des Kraftfahrzeugs verwendbar ist. Bei dem Bedienelement des Kraftfahrzeugs, welches wahlweise auch zur Bedienung eines Fahrzeugnavigationssystems des Kraftfahrzeugs verwendbar ist, kann es sich beispielsweise um einen Touchscreen oder einen Dreh-Drück-Steller handeln. Die Bedienung kann ganz oder teilweise auch durch Sprachbefehle oder Gesten erfolgen. Gegebenenfalls können verschiedene Eingabevarianten auch vorteilhaft miteinander kombiniert werden.

Die Bedienung kann durch ein einziges oder mehrere Bedienelemente erfolgen. Erfolgt die Bedienung durch mehrere Bedienelemente, so ist es vorteilhaft, wenn es sich bei all diesen Bedienelementen um Bedienelemente handelt, die wahlweise auch zur Bedienung eines Fahrerinformationssystems des Kraftfahrzeugs verwendbar sind. Dabei müssen nicht alle erfindungsgemäß verwendeten und bereits im Kraftfahrzeug vorhandenen Bedienelemente zur Bedienung desselben Fahrerinformationssystems des Kraftfahrzeugs verwendbar sein. Denkbar ist auch eine Kombination mit anderen schon im Fahrzeug vorhandenen Bedienelementen, die ursprünglich nicht für Fahrerinformationssysteme genutzt werden.

Während die aus dem Stand der Technik bekannten Verfahren einen voll ausgebildeten Computer-Arbeitsplatz voraussetzen, kann durch die Erfindung mit sehr einfachen Mitteln eine Anwendung eines Verfahrens der eingangs genannten Gattung im Kraftfahrzeugbereich ermöglicht werden. Es müssen keine gesonderten Bedienelemente bereitgestellt werden.

Gemäß der vorliegenden Erfindung ist das Fahrerinformationssystem im Sinne der Erfindung als Fahrzeugnavigationssystem ausgebildet. Es wird also ein Bedienelement für die Zwecke der Erfindung verwendet, welches wahlweise auch zur Bedienung eines Fahrzeugnavigationssystems des Kraftfahrzeugs verwendbar ist.

In der Regel sind Bedienelemente, die im Kraftfahrzeug zur Bedienung eines Fahrzeugnavigationssystems vorgesehen sind, in besonderem Maße für die Anwendung zu den Zwecken der Erfindung geeignet, da die Bedienung eines Verfahrens der eingangs genannten Gattung den typischen Verfahren zur Bedienung eines Fahrzeugnavigationssystems, insbesondere der Auswahl eines Navigationszieles, sehr ähnlich ist. Das Prinzip der Organisation von Daten in landkartenähnlichen Strukturen wird somit nicht nur im Sinne eines bloßen Transfers für den Kraftfahrzeugbereich nutzbar gemacht, sondern es werden durch die Erfindung zudem Synergien mit den bereits vorhandenen Bedienelementen des Kraftfahrzeugs erzeugt.

Dies gilt in besonderem Maße, wenn die Bedienung des erfindungsgemäßen Verfahrens durch die Bedienelemente zumindest teilweise in gleicher oder ähnlicher Art und Weise erfolgt wie die des Fahrzeugnavigationssystems selbst, insbesondere wenn die Eingabe von auf die landkartenähnliche Struktur bezogenen Eingabedaten in derselben Art und Weise erfolgt wie die Eingabe geographiebezogener Eingabedaten bei dem Fahrzeugnavigationssystem. Erlaubt das Fahrzeugnavigationssystem dem Bediener beispielsweise auf die Fahrzeugnavigation bezogene Steuerungsoperationen, wie etwa ein Verschieben des dargestellten Kartenausschnitts oder ein Ein- bzw. Auszoomen, und sind vergleichbare Steuerungsoperationen auch bei dem erfindungsgemäßen Verfahren bezogen auf die landkartenähnliche Struktur vorgesehen, so ist es vorteilhaft, wenn der Bediener diese vergleichbaren Steuerungsoperationen in derselben oder ähnlicher Art und Weise, also durch dieselben oder ähnliche Bedienkommandos, vornehmen kann wie die auf die Fahrzeugnavigation bezogenen Steuerungsoperationen des Fahrzeugnavigationssystem. Wenn es das Fahrzeugnavigationssystem beispielsweise erlaubt, aus einer Kartenansicht durch eine Folge von Bedienkommandos eine Stadt auszuwählen (beispielsweise Verschieben eines Zielkreuzes bis zur Überlappung mit einem graphischen Symbol für die Stadt und anschließende Bestätigung), so ist es vorteilhaft, wenn dieselbe bzw. eine ähnliche Folge von Bedienkommandos zur Auswahl eines Datensatzes bzw. einer Menge von Datensätzen (z.B. Musikstücke eines Musikinterpreten) verwendet wird. Für den Bediener bietet eine solche Ausführungsform des erfindungsgemäßen Verfahrens den Vorteil, dass er keine neuen Bedienmechanismen erlernen muss, sondern dass er seine in der Regel bereits vorhandene Fähigkeit zur Bedienung des Fahrzeugnavigationssystems nun auch bei der Auswahl von Datensätzen anwenden kann.

Erfindungsgemäß stellt eine graphische Anzeigeeinheit dem Bediener eine landkartenähnliche Struktur dar. In diese landkartenähnliche Struktur, sind Auswahlobjekte eingebettet, über welche Datensätze mittels des Bedienelements auswählbar sind. Gemäß einer bevorzugten Ausführungsform der Erfindung wird die landkartenähnliche Struktur über eine Anzeigeeinheit dargestellt, die wahlweise zur Visualisierung von Ausgabedaten des Fahrzeugnavigationssystems verwendbar ist. Es muss dann auch keine gesonderte Ausgabeeinheit für die Umsetzung der Erfindung bereitgestellt werden.

Durch das erfindungsgemäße Verfahren kann ein einziger oder mehrere Datensätze ausgewählt werden. Das erfindungsgemäße Verfahren wird dazu verwendet, ein einziges oder mehrere Musikstücke auszuwählen, die durch eine Musikanlage des Kraftfahrzeugs wiedergegeben werden sollen. Die Datensätze sind in diesem Fall also zumindest teilweise Musikstücke. Beispielsweise können in der landkartenähnlichen Struktur Kontinente oder Inseln für bestimmte Musikrichtungen (z.B. Rockmusik, Popmusik, Klassik und Jazz) definiert werden. Die landkartenähnliche Struktur und deren Anzeige können derart gestaltet werden, dass, wenn die Ansicht der Karte vergrößert wird (Einzoomen), innerhalb der Inseln Gebiete mit wiederum besonders ähnlicher Musik identifizierbar sind, z. B. Gebiete für Hardrock und Rockballaden innerhalb des "Kontinents" Rock.

Die landkartenähnliche Struktur kann auch andere themengebundene Bestandteile umfassen, wie etwa eine "Top Ten"-Insel oder eine "Persönliche Favoriten"-Insel. Dies ermöglicht ein noch schnelleres bzw. einfacheres Wiederauffinden bestimmter Datensätze.

Durch die Erfindung wird die Organisation und Auswahl von Datensätzen, insbesondere Musikstücken im Kraftfahrzeug erheblich erleichtert. Gemäß dem Stand der Technik erfolgt die Bedienung von großen Datenmengen, z.B. Musikinhalten (CD/MP3) im Fahrzeug meist listenbasiert. Der Fahrer wählt dabei aus einer Liste von Möglichkeiten z. B. Genre, Künstler, Album oder Titel aus. Für große Datenmengen, wie z.B. Musikarchive in mp3-Playern (iPod) oder auf Entertainmentservern, ist die listenbasierte Bedienung jedoch sehr umständlich. Der Fahrer muss aus Listen mit unter Umständen mehreren tausend Einträgen wählen. Durch eine hierarchische Gliederung kann die Anzahl der Listeneinträge zwar reduziert werden, der Fahrer muss dann jedoch sequenziell in mehreren Hierarchieebenen mit vielen Listeneinträgen eine Auswahl treffen. Dies führt zu einer langwierigen Bedienung.

Statt einer Listenbedienung sieht die Erfindung nun auch für die Auswahl von Datensätzen im Kraftfahrzeug eine Bedienmetapher analog zu einer Landkarte vor. Die Festlegung der Positionen der auswählbaren Datensätze auf der Landkarte erfolgt bevorzugt nach musikalischen Ähnlichkeiten. Ähnliche Datensätze werden dann auf der Landkarte nah beieinander angeordnet. Die Ähnlichkeit ist für einen Bediener, der die Ausgabe der Anzeigeeinheit betrachtet, somit sehr einfach und intuitiv feststellbar. Die Suche nach Datensätzen einer bestimmten Art wird durch die Erfindung in mehrerlei Hinsicht erleichtert. Etwa kann der Bediener anhand der Art der während der Suche nach einem bestimmten Datensatz aufgefundenen anderen Datensätze feststellen, ob er gerade in einem Bereich sucht, in welchem er Aussicht auf Erfolg hat. Er kann bei der Suche auch einem Gradienten zunehmender Ähnlichkeit folgen. Wenn z.B. ein links im Bildschirm dargestellter Datensatz einem gesuchten Datensatz ähnlicher ist als ein rechts im Bildschirm dargestellter Datensatz, könnte der gesuchte Datensatz links vom aktuellen Bildschirmausschnitt zu suchen sein. Das erfindungsgemäße Verfahren eignet sich auch und insbesondere für die Auswahl von Datensätzen bzw. die Suche nach Datensätzen anhand unscharfer Kriterien (z. B. Suche nach einem Musikstück, welches Musikstücken eines Interpreten X ähnlich ist).

Wenn die landkartenähnliche Struktur einer real existierenden Landschaft entspricht, können die Datensätze, insbesondere Musikstücke, gemäß einer speziellen Ausführungsform der Erfindung nach Ihrer tatsächlichen geographischen Herkunft in der landkartenähnlichen Struktur positioniert werden. Dann würden z. B. Auswahlobjekte zu Musikstücken italienischer Interpreten in der landkartenähnlichen Struktur in Italien angeordnet.

Alternativ kann die Positionierung der Datensätze bzw. Auswahlobjekte beispielsweise thematisch erfolgen. So können im Falle der Organisation von Musikstücken etwa eigene Kontinente oder Inseln für Rockmusik, Popmusik, Klassik und Jazz definiert werden.

Die für die Umsetzung der Erfindung anfallende Rechenleistung wird vorzugsweise durch eine in dem Kraftfahrzeug angeordnete Recheneinheit erledigt. Diese Recheneinheit kann aus mehreren, ggf. auch verteilt angeordneten, Komponenten zusammengesetzt sein. Dabei kann es sich um eine Recheneinheit handeln, durch welche auch andere Anwendungen ausführbar sind. Insbesondere ist es vorteilhaft, wenn durch die Recheneinheit auch andere Anwendungen ausführbar sind, welche eine Grafikausgabe mittels der erfindungsgemäß verwendeten Anzeigeeinheit implizieren und wenn die dabei verwendeten Grafikausgabeverfahren zumindest teilweise auch für die Zwecke der Erfindung einsetzbar sind. Soweit diese Grafikausgabeverfahren verwertbar sind, müssen dann nämlich keine eigenen Grafikausgabeverfahren für die Zwecke der Erfindung bereitgestellt oder entwickelt werden. Bei der Recheneinheit kann es sich auch um einen Bestandteil des Fahrzeugnavigationssystems handeln.

Die Datensätze sind in einer mit der Recheneinheit verbundenen bzw. verbindbaren Speichereinheit abgelegt. Die Verbindung kann leitungsgebunden oder drahtlos erfolgen. Bei der Speichereinheit kann es sich um eine in das Kraftfahrzeug integrierte Speichereinheit oder um eine portable Speichereinheit handeln. Die Speichereinheit kann beispielsweise als mp3-Player, iPod, PDA, Speicher-Stick oder mobile Festplatte ausgebildet sein. Die Speichereinheit kann auch stationär außerhalb des Kraftfahrzeugs angeordnet sein, z. B. als kommerzieller Entertainmentserver.

Die Speichereinheit und die Recheneinheit bzw. eine Komponente einer aus mehreren Komponenten bestehenden Recheneinheit können auch gemeinsam in ein einziges Gerät integriert sein. Das Gerät kann in diesem Fall geeignet sein, die in der Speichereinheit gespeicherten Datensätze bestimmungsgemäß durch die Recheneinheit bzw. Komponente zu verarbeiten. Beispielsweise kann in dem Falle, dass die Datensätze zumindest teilweise Musikstücke sind, ein mp3-Player die in seiner Speichereinheit gespeicherten Musikstücke mittels seines Prozessors wiedergeben. Selbst wenn ein solches portables Gerät eine Recheneinheit, etwa zum Zweck der Musikwiedergabe, aufweist, kann eine andere Recheneinheit, beispielsweise eine fest ins Kraftfahrzeug integrierte Recheneinheit, diejenige Recheneinheit darstellen, welche Speichereinheit, Anzeigeeinheit und Bedienelement im Sinne der Erfindung verbindet. Die Recheneinheit des Geräts kann auch eine Komponente einer aus mehreren Komponenten bestehenden Recheneinheit im Sinne der Erfindung darstellen.

Die erfindungsgemäße Verbindung der Recheneinheit mit der Speichereinheit, der Anzeigeeinheit und dem Bedienelement kann jeweils direkt oder indirekt, z.B. über andere Recheneinheiten, ausgeführt sein. Die Verbindung kann jeweils dauerhaft oder aber, insbesondere bei einer in einem portablen Gerät angeordneten Speichereinheit, temporär.

Die Einbettung der Auswahlobjekte in die landkartenähnliche Struktur erfolgt bevorzugt so, dass diese sich dem Bediener graphisch so darstellt, als ob es sich bei den Auswahlobjekten um Objekte einer Landkarte, etwa Kontinente, Länder, Inseln, Städte, Straßen oder Häuser handelt. Das mentale Modell des Bedieners wird auf diese Weise besonders gut unterstützt. Die landkartenähnliche Struktur kann komplett oder zu großen Teilen aus Auswahlobjekten zusammengesetzt sein (z.B. Weltkarte mit Kontinenten, die selbst Auswahlobjekte sind). Die landkartenähnliche Struktur kann aber auch im Wesentlichen lediglich den organisatorischen Rahmen für die eingebetteten Auswahlobjekte darstellen (z. B. Weltkarte mit Kontinenten und Ländern, die selbst keine Auswahlobjekte sind, jedoch mit Städten, die Auswahlobjekte sind). Die Auswahlobjekte sind durch den Bediener mittels des Bedienelements auswählbar.

Im einfachsten Fall ist jedem Auswahlobjekt genau ein Datensatz zugeordnet, der direkt anhand des Auswahlobjekts, etwa durch einen Klick auf das Auswahlobjekt oder ein anderes auf das Auswahlobjekt bezogenes Bedienkommando, auswählbar ist.

Die Datensätze können auch hierarchisch strukturiert werden. Bei hierarchischer Strukturierung können einem Datensatz auch mehrere Datensätze indirekt zugeordnet sein. Beispielsweise können mehrere Musikstücke eines Musikinterpreten diesem Musikinterpreten zugeordnet sein. Die Auswahl eines einem Musikinterpreten zugeordneten Auswahlobjekts mittels des Bedienelements kann dann beispielsweise zu einer Umschaltung der Anzeige führen, nach welcher für eine Vielzahl verfügbarer Musikstücke dieses Musikinterpreten jeweils ein Auswahlobjekt angezeigt wird. Diese Auswahlobjekte und somit die zugehörigen Musikstücke sind dann in einem nächsten Bedienschritt auswählbar. Mehrere Musikinterpreten können wiederum einer Musikrichtung zugeordnet sein, für die ein eigenes Auswahlobjekt existiert.

Es können alle oder nur ein Teil der in der Speichereinheit abgelegten Datensätze in die landkartenähnliche Struktur eingebettet sein.

Die für die landkartenähnliche Struktur verwendete Landkarte kann grundsätzlich eine beliebige Landkarte sein. Sie kann eine Phantasielandschaft repräsentieren. Es kann sich jedoch auch um eine Landkarte zu einer tatsächlich existierenden Landschaft handeln. Beispielsweise kann die Landkarte eine Weltkarte oder ein Stadtplan sein.

Die Auswahlobjekte sind erfindungsgemäß als typische Elemente einer Landkarte ausgebildet. Denkbar ist etwa die Ausbildung als Kontinent, Land, Stadt, Stadtteil, Straße, Gebirge, Berg, Fluss oder Haus. Insbesondere in der untersten Stufe einer Hierarchie kann ein Auswahlobjekt aber auch als textuelle Darstellung oder einfaches graphisches Symbol ausgebildet sein. So kann beispielsweise einfach der Name des Datensatzes oder ein anderer Bezeichner als textuelles Auswahlobjekt in die landkartenähnliche Struktur eingebettet sein.

Vorzugsweise lassen die Auswahlobjekte Rückschlüsse auf die ihnen zugeordneten Datensätze zu. Beispielsweise kann die Form oder Größe eines Auswahlobjekts abhängig von einem charakteristischen Parameter der zugeordneten Datensätze, insbesondere der Anzahl zugeordneter Datensätze, gewählt werden. Wird ein Musikinterpret beispielsweise als große Stadt dargestellt, lässt dies, ohne dass eine weitere Bedienaktion erforderlich wäre, den Schluss zu, dass viele Musikstücke des Musikinterpreten verfügbar sind. Gemäß einer anderen Ausführungsform kann auch der durch einen Datensatz bzw. eine Menge von Datensätzen belegte Speicherplatz auf solche Art und Weise visualisiert werden. Repräsentationen dieser Art können auch über die Größe einer Insel oder die Breite eines Flusses erreicht werden. Auch über die topographische Höhe an einer Stelle der dargestellten Karte oder die Höhe eines Berges kann die Anzahl der unterliegenden Musikstücke oder ein anderer charakteristischer Parameter visualisiert werden, wodurch dem Bediener beispielsweise ein Urteil über die Gewichtung dieses Abschnitts in Bezug auf das ganze Archiv ermöglicht.

Vorteilhaft sind solche von den zugrunde liegenden Datensätzen abhängigen Modifikationen der landkartenähnlichen Struktur insbesondere dann, wenn der Bediener die Möglichkeit hat, dem System Datensätze zur Verfügung zu stellen und/oder zu entnehmen. Der Bediener erfährt dann über die Umgestaltung der Elemente der landkartenähnlichen Struktur eine Rückmeldung über sein Handeln.

Wenn die landkartenähnliche Struktur in Abhängigkeit von den enthaltenen Datensätzen gestaltet wird, kann sie in diesem oder anderen Fällen auch zur Visualisierung des zugrunde liegenden Datenarchivs dienen. So können anhand des entstehenden Landschaftsbilds sogar verschiedene Datenarchive miteinander verglichen und bezüglich der enthaltenen Datensätze, beispielsweise deren Anzahl und Verteilung auf bestimmte Kategorien, bewertet werden. Eine von den zugrunde liegenden Datensätzen abhängige Modifikation der landkartenähnlichen Struktur ist also auch für diese Zwecke von Vorteil.

Gemäß einer bevorzugten Ausführungsform der vorliegenden Erfindung können die Auswahlobjekte mit Attributen (z.B. Sternen, Verwendung einer besonderen Schriftart oder Farbänderungen) von andern Auswahlobjekten abgehoben werden. Die Attribute können automatisch, beispielsweise abhängig von der Nutzungshäufigkeit eines Datensatzes, erstellt werden. Dem Bediener kann aber auch die Möglichkeit gegeben werden, den Auswahlobjekten bzw. den zugehörigen Datensätzen oder Gruppen von Datensätzen Attribute zuzuteilen.

Vorzugsweise ist der mittels der Anzeigeeinheit ausgegebene Ausschnitt aus der landkartenähnlichen Struktur durch den Bediener unter Nutzung eines Bedienelements wählbar. Vorteilhaft ist insbesondere die Möglichkeit eines Verschiebens des Ausschnitts sowie ein Ein- und Auszoomen. Auch alle anderen aus dem Stand der Technik bekannten Bedienmechanismen zur Veränderung des Kartenausschnitts einer betrachteten Landkarte sind grundsätzlich anwendbar. Der Zoomfaktor bei der Kartenansicht ist vorzugsweise frei wählbar. So kann insbesondere bei Verwendung eines Touchscreens als Bedienelement sehr einfach direkt zu einem gewünschten Kartenausschnitt gesprungen werden. Bei genauer Kenntnis der Karte kann ein geübter Bediener so sehr kurze Bedienzeiten erreichen. Bei hierarchischer Struktur der Datensätze wird der Kartenausschnitt bei Auswahl eines übergeordneten Auswahlobjekts vorzugsweise selbsttätig derart festgelegt, dass die dem übergeordneten Auswahlobjekt zugeordneten Auswahlobjekte gut im Kartenausschnitt erkennbar sind.

Um die Anzahl sichtbarer Auswahlobjekte zu begrenzen, kann die Anzeige so gestaltet werden, dass ein Auswahlobjekt erst sichtbar wird, wenn ein bestimmter Zoomfaktor erreicht ist. Die Anzeige wird dadurch übersichtlicher. Bei hierarchischer Struktur der Datensätze können Auswahlobjekte sichtbar werden, wenn ein übergeordnetes Auswahlobjekt ausgewählt wird. Es können aber auch Auswahlobjekte verschiedener Hierarchieebenen gleichzeitig sichtbar und/oder auswählbar sein.

Die Erfindung eignet sich insbesondere zur Unterstützung des Bedieners bei schwer bzw. nur unklar artikulierbaren bzw. nur schwer in ein herkömmliches technisches System eingebbaren Suchanfragen. Häufig können sich Bediener nicht exakt an den Namen eines gesuchten Datensatzes erinnern. Eine Auswahl aus einer alphabetisch sortierten Liste ist in einem solchen Fall sehr schwierig, da die gesamte Liste durchsucht werden müsste. Anders bei der Auswahl aus einer landkartenähnlichen Struktur. Der Bediener kann sich in der Regel zumindest an die Art des Datensatzes erinnern und wird Datensätze solcher Art durch die an Ähnlichkeiten orientierte Anordnung schnell und einfach auffinden. Die Suche wird dadurch schnell auf wenige relevante Datensätze eingegrenzt. Innerhalb der eingegrenzten Menge relevanter Datensätze, die beispielsweise durch ein Einzoomen verbessert darstellbar ist, kann dann auch der tatsächlich gesuchte Datensatz leicht aufgefunden werden.

Ein Bediener kann sich unter Umständen auch sein photographisches Gedächtnis zunutze machen. Wenn der Bediener sich zwar nicht an den exakten Namen eines Datensatzes, aber an die ungefähre Positionierung des zugehörigen Auswahlobjekts in der landkartenähnlichen Struktur erinnern kann, wird er den gesuchten Datensatz dort schnell auffinden. Den hierfür verantwortlichen menschlichen Fähigkeiten wird auf diese Weise Rechnung getragen.

Gemäß einer vorteilhaften Weiterbildung der Erfindung kann eine Auswahl mehrerer Datensätze getätigt werden, indem eine Route durch die landkartenähnliche Struktur definiert wird. Besonders vorteilhaft ist dies, wenn die Interaktion des Bedieners bei der Planung der Route durch die landkartenähnliche Struktur im Wesentlichen derjenigen Interaktion entspricht, in die der Bediener mit dem Fahrzeugnavigationssystem eintritt, wenn er eine Fahrtroute plant. Der Bediener kann seine Fähigkeit zur Bedienung des Fahrzeugnavigationssystem somit ohne weiteres zur Auswahl von Datensätzen anwenden.

Aus der so geplanten Route durch die landkartenähnliche Struktur kann insbesondere eine Sequenz von Datensätzen abgeleitet werden. Im Falle von Musikstücken kann so beispielsweise eine "Musikroute" erzeugt werden. Die Umsetzung kann beispielsweise derart erfolgen, dass alle Musiktitel, deren Auswahlobjekte einen Mindestabstand zu der Musikroute unterschreiten, einer Wiedergabeliste hinzugefügt werden. Auf diese Weise entsteht eine Wiedergabeliste, die im Stile einer musikalischen Reise von einem musikalischen Ausgangspunkt zu einem musikalischen Endpunkt führt. Gemäß dem Stand der Technik wäre zur Erstellung einer solchen Wiedergabeliste nicht nur eine Vielzahl von Eingabeaktionen, sondern auch ein ausgeprägter musikalischer Sachverstand erforderlich, denn Ähnlichkeiten von Musikstücken finden in einer listenbasierten Organisation von Datensätzen in der Regel keinen Niederschlag und sind. Durch die Erfindung wird der Aufwand für die Erstellung einer solchen Wiedergabeliste auf ein Mindestmaß, nämlich die von der Routenplanung mit Fahrzeugnavigationssystemen gewohnten Eingabeaktionen, beispielsweise Start- und Endpunkt, reduziert. Durch das Konzept der Musikroute bietet sich dem Bediener somit eine sehr einfache und effiziente Möglichkeit der Musikauswahl. Dabei muss er keine neue Bedienstrategie erlernen oder sich an eine solche gewöhnen, da ihm die Bedienstrategie bereits von der Nutzung des Fahrzeugnavigationssystem vertraut ist.

Auch die von der Bedienung eines Fahrzeugnavigationssystem bekannte Vorgabe von Routenkriterien, beispielsweise schnellste oder kürzeste Route, ist auf den oben beschriebenen Fall übertragbar. Die Musikroute kann dementsprechend anhand von Routenkriterien so beeinflusst werden, dass sich eine schnelle Annäherung vom Start- zum Endpunkt (unter Umständen einhergehend mit bemerkbaren Veränderungen der Musikrichtung zwischen aufeinander folgenden Stücken), eine sanfte Annäherungen (kaum bemerkbare Veränderungen der Musikrichtung zwischen aufeinander folgenden Stücken) oder eine Annäherung auf Umwegen (z.B. von Pop über Klassik zu Rock) ergibt.

Vorteilhafte Ausführungsformen der Erfindung ergeben sich auch aus einer geschickten Übertragung der aus anderen technischen Bereichen bekannten Berücksichtigung von so genannten Points of Interest (POI) und darauf basierenden "Location Based Services", also Diensten irgendeiner Art, die abhängig vom momentanen Standort angeboten werden. Analog zu dem bekannten Konzept der Points of Interest, können auch Musikrouten geplant bzw. modifiziert, insbesondere ergänzt werden. Zum einen kann eine Wiedergabeliste auf Points of Interest in der tatsächlichen Umgebung des Kraftfahrzeugs reagieren. Zum anderen können Points of Interest in der "Musiklandschaft" in die Routenplanung mit einbezogen werden. Dazu können besonders interessante Künstler einer Region automatisch in die Wiedergabeliste aufgenommen werden, wenn eine geplante Musikroute durch diese Region verläuft, oder es wird die Möglichkeit geboten, an interessanten Stellen zu "rasten" (mehr von einem bestimmten Künstler) oder einen Abstecher (Umweg) in eine Region abseits der eigentlichen Route zu machen (mehr von einer bestimmten Musikrichtung oder Art). Danach kann die alte Route einfach wieder aufgenommen werden.

Vorzugsweise wird die Musikroute unabhängig von einer eventuell geplanten Fahrtroute festgelegt. Der Fahrer kann dann beispielsweise musikalisch durch einen anderen Kontinent "reisen" als denjenigen, durch den er tatsächlich mit dem Kraftfahrzeug fährt (z.B. südamerikanische Musik auf einer Fahrt durch Europa). Die Musikroute kann aber auch einer durch das Fahrzeugnavigationssystem geplanten Fahrtroute entsprechen (z.B. von bayerischer Volksmusik bis zu französischen Chansons auf einer Fahrt von Bayern nach Frankreich). In diesem Fall wird bei der Umsetzung der Musikroute in eine Wiedergabeliste vorzugsweise darauf geachtet, dass die Spieldauer der Wiedergabeliste in etwa der voraussichtlichen Fahrtzeit entspricht. Wenn die Musikroute der durch das Fahrzeugnavigationssystem geplanten Fahrtroute entspricht, kann vorteilhafterweise eine gesonderte Eingabe bzw. Planung der Musikroute entfallen. Die durch das Fahrzeugnavigationssystem geplante Fahrtroute muss dann lediglich an die zur Umsetzung der Erfindung genutzte Recheneinheit weitergegeben werden, sofern es sich bei der Recheneinheit nicht ohnehin um einen Bestandteil des Fahrzeugnavigationssystems handelt.

Eine Auswahl mehrerer Datensätze kann alternativ auch getätigt werden, indem ein Gebiet in der landkartenähnlichen Struktur definiert wird. Das Ergebnis kann bei Nutzung der Erfindung zur Organisation und Auswahl von Musikstücken eine Wiedergabeliste sein, die aufgrund der ähnlichkeitsbasierten Ordnung der Datensätze in der landschaftsähnlichen Struktur, nur Musikstücke ähnlicher Art enthält. Auch eine solche Wiedergabeliste ist mit Verfahren gemäß dem Stand der Technik nur sehr aufwändig und mit ausgeprägtem Sachverstand erstellbar. Unter Nutzung der Erfindung kann sie durch die bloße Markierung eines Gebiets auf der landkartenähnlichen Struktur erfolgen.

Es kann auch eine Musikroute festgelegt werden, indem ein Ausschnitt aus der landkartenähnlichen Struktur gewählt wird, beispielsweise eine Insel oder eine Fläche innerhalb einer Insel, und indem eine zufällige Wiedergabeliste aus der Menge der in dem Ausschnitt angesiedelten Datensätze erstellt wird. Eine solche Wiedergabeliste kann auf der Anzeigeeinheit als Route angezeigt werden.

Gemäß bevorzugter Ausführungsformen der vorliegenden Erfindung ist die landkartenähnliche Struktur mit einer Legende versehen und/oder den Auswahlobjekten sind einblendbare Zusatzinformationen zugeordnet. So kann der Bediener auch über Sachverhalte informiert werden, die der Kartenansicht nicht intuitiv entnehmbar sind, beispielsweise komplexere Metaphern, die dem Bedienkonzept zugrunde liegen.

Die Erfindung bietet für den Bediener den Vorteil einer hohen Informationsdichte, die der Bediener teilweise auch unterbewusst wahrnehmen und verarbeiten kann, ohne abgelenkt zu werden. Mit der Landkartenmetapher wird das graphische und räumliche Erinnerungsvermögen des Nutzers ausgenutzt. Der Bediener weiß dann beispielsweise in einer konkreten Situation, in der er klassische Musik zu hören wünscht, dass sich die Musikrichtung Klassik oben rechts auf der ihm dargestellten landkartenähnlichen Struktur befindet und kann somit sehr schnell eine entsprechende Auswahl treffen, ohne diese Auswahl mühselig listenbasiert vornehmen zu müssen.

Durch die Anordnung der Datensätze nach Ähnlichkeit wird die Auswahl zusätzlich erleichtert. Statt einzelner Datensätze kann der Nutzer beispielsweise zunächst einen Bereich auf der Landkarte auswählen. Diese Auswahl enthält dann beispielsweise nur ähnliche Musikstücke. Der Grad der Ähnlichkeit wird dabei durch den Vergrößerungsmaßstab der Kartenansicht bei der Auswahl festgelegt.

Die Landkarte als Gegenstand des täglichen Lebens und einer alten Wissenschaft bietet zusätzlich eine Fülle an vertrauten Codes wie Höheninformationen, verschiedene Ansichten (beispielsweise Wärmebild), Prädikatisierungen (vgl. Reiseführer mit Kennzeichnungen von Hotels, Sehenswürdigkeiten, ...). Mit Hilfe dieser kann das beschriebene Basiskonzept erweitert werden und bietet auf eine für den Benutzer sehr intuitive Art und Weise Möglichkeiten zur Datenfilterung und Kennzeichnung, die in herkömmlichen Listendarstellungen nur sehr schwerfällig über zusätzliche Listen und Sortierungen zu erreichen sind bzw. wären.

Vorteilhaft ist auch die Nutzung bekannter Metaphern aus der Kartographie, die die landkartenähnliche Struktur für den Bediener intuitiv verständlich machen. Unterstützt durch sein räumliches Erinnerungsvermögen, das schon bei kurzen Listen nicht mehr angewendet werden kann, ist es dem Bediener möglich, eine große Anzahl sekundärer Informationen aufzunehmen, die bei fortschreitender Nutzungsdauer den Anwendungsprozess beschleunigen und erleichtern.

Gerade in einer automotiven Umgebung spielt die Landkarte eine große Rolle. Gemäß einer Weiterbildung der Erfindung kann äquivalent zur Wahl einer Navigationsroute eine Musikroute über eine Musiklandkarte definiert werden. Die Landkartenmetapher unterstützt insofern auch eine sehr einfache und effiziente Bedienstrategie für die Musikauswahl während der Fahrt.

Eine vorteilhafte Ausführungsform der Erfindung wird im Folgenden anhand der Zeichnungen näher beschrieben. Dabei zeigen jeweils schematisch
- Fig. 1: den Aufbau und den Signalfluss in einem System zur Ausführung einer bevorzugten Ausführungsform eines erfindungsgemäßen Verfahrens,
- Fig. 2: die Grundansicht einer landkartenähnlichen Struktur bei einer bevorzugten Ausführungsform eines erfindungsgemäßen Verfahrens,
- Fig.3: eine Detailansicht einer landkartenähnlichen Struktur mit erhöhtem Zoomfaktor bei einer bevorzugten Ausführungsform eines erfindungsgemäßen Verfahrens,
- Fig. 4: eine andere Detailansicht einer landkartenähnlichen Struktur mit abermals erhöhtem Zoomfaktor bei einer bevorzugten Ausführungsform eines erfindungsgemäßen Verfahrens.

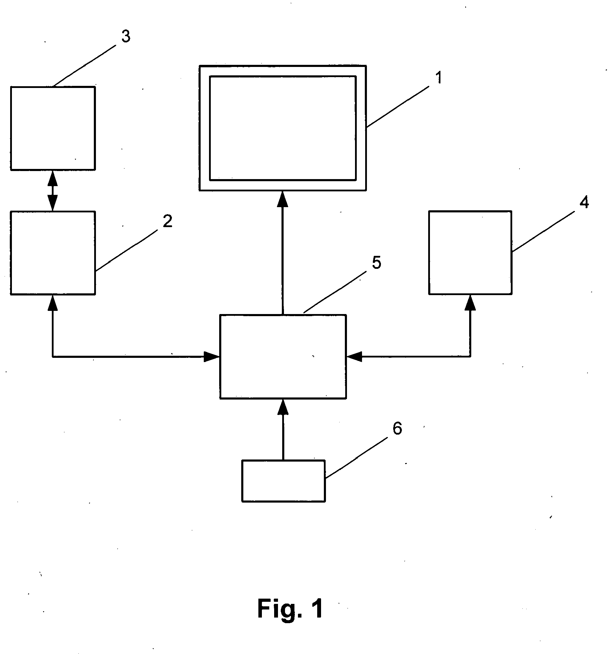

Fig. 1 zeigt den Aufbau und den Signalfluss in einem System zur Ausführung einer bevorzugten Ausführungsform eines erfindungsgemäßen Verfahrens. Ein nicht eigens graphisch dargestelltes Kraftfahrzeug enthält eine zentrale Informationsverarbeitungseinheit 5, von welcher unter anderem ein Graphikdisplay 1 angesteuert wird. An die zentrale Informationsverarbeitungseinheit 5 sind ein Navigationsrechner 4 und ein Musikrechner 2 angeschlossen. Der Musikrechner 2 ist mit einer Speichereinheit 3 verbunden, in welcher eine Vielzahl von Musikstücken abgelegt ist. An die zentrale Informationsverarbeitungseinheit 5 ist ferner eine Bedieneinrichtung 6 angeschlossen. Die von einem Bediener eingegebenen Bedienkommandos werden von der Bedieneinrichtung 6 an die zentrale Informationsverarbeitungseinheit 5 weitergegeben.

Ferner weist das Graphikdisplay 1 Eigenschaften eines Touchscreens auf.

Die über den Touchscreen eingegebenen Bedienkommandos werden ebenso wie die Bedienkommandos der übrigen Bedienelemente an die zentrale Informationsverarbeitungseinheit 5 weitergegeben. Insofern ist das Graphikdisplay 1 hinsichtlich seiner Verwendung als Bedienelement teils auch als Teil der Bedieneinrichtung 6 aus Fig. 1 anzusehen.

Gemäß einer alternativen, hier nicht näher beschriebenen Ausführungsform der Erfindung ist das Grafikdisplay 1 als herkömmliches Display ohne Touchfunktionalität ausgebildet. Die Bedienung erfolgt dann vollständig über die Bedieneinrichtung 6 als solche.

Die Bedieneinrichtung 6 weist eine Modus-Taste auf, mittels welcher ein Bediener zumindest zwischen einem Navigationsmodus und einem Musikauswahl-Modus umschalten kann.

Gemäß einer alternativen, hier nicht näher beschriebenen Ausführungsform der Erfindung erfolgt die Umschaltung statt mittels einer Modus-Taste selbsttätig anhand eines Kontexts im Fahrerinformationsmenü.

Im Navigationsmodus kann der Bediener unter anderem Navigationsziele buchstabenweise textuell über Bedienelemente der Bedieneinrichtung 6 eingeben. Bei der textuellen Eingabe wird der Bediener in an sich bekannter Weise durch einen so genannten "Speller" unterstützt, der nach Validierung bzw. Eingabe einer Zeichenkette alle mit dieser Zeichenkette beginnenden selektierbaren Länder-, Städte- oder Straßennamen aufzeigt. Der Bediener kann auch durch die Auswahl von Bildbereichen auf dem Touchscreen in eine Landkarte ein- und auszoomen und kann Navigationsziele durch Antippen auf der angezeigten Landkarte auswählen.

Der Bediener hat auch die Möglichkeit, Navigationsrouten zu planen. Hierzu gibt er im Navigationsmodus ein Routenziel ein. Nach dieser Eingabe hat der Bediener die Möglichkeit, Routenkriterien einzustellen, etwa ob eine schnelle oder eine kurze Fahrtroute zum Routenziel gewünscht ist.

Der Navigationsrechner 4 plant die Navigationsroute entsprechend und sorgt über die zentrale Informationsverarbeitungseinheit 5 für eine Kartenanzeige auf dem Graphikdisplay 1. Die zur Berechnung erforderlichen Informationen empfängt der Navigationsrechner 4 von der zentralen Informationsverarbeitungseinheit 5.

Gemäß alternativer, hier nicht näher beschriebener Ausführungsformen der Erfindung kann die anfallende Rechenleistung auch anders auf zur Verfügung stehende Recheneinheiten, insbesondere Recheneinheiten in anderen Steuergeräten des Kraftfahrzeugs, verteilt werden.

Im Musikauswahl-Modus, welchen der Bediener durch Betätigung der Modus-Taste der Bedieneinrichtung 6 erreicht, wird dem Bediener eine virtuelle Musikkarte auf dem Graphikdisplay 1 dargestellt. Die Musikkarte stellt eine landkartenähnliche Struktur im Sinne der Erfindung dar. Ihr optisches Erscheinungsbild entspricht dem gewohnten Erscheinungsbild einer Landkarte.

In die Musikkarte sind Auswahlobjekte eingebettet, die eine Auswahl von Musikstücken erlauben sollen. Die virtuelle Musikkarte ist im vorliegenden Beispiel zusammengesetzt aus fünf Inseln, welche für fünf Musikrichtungen stehen. Jede Insel enthält Städte, welche für jeweils einen Musikinterpreten stehen. Jede Stadt enthält Häuser, die jeweils für einen Musiktitel stehen.

Ein Datenmodell der Musikkarte wird entsprechend graphischen Gestaltungsvorgaben durch den Musikrechner 2 erstellt. Das Datenmodell der Musikkarte und wichtige Anzeigeparameter werden von dem Musikrechner 2 an die zentrale Informationsverarbeitungseinheit 5 weitergegeben und von dieser dementsprechend zur Anzeige gebracht. Zu den Anzeigeparametern gehören unter anderem die Positionen der Städte auf den Inseln, die nach musikalischen Ähnlichkeiten vom Musikrechner 2 ermittelt werden. Die musikalischen Ähnlichkeiten werden anhand von Daten ermittelt, die mit den Musikstücken in der Speichereinheit 3 abgelegt sind oder aus diesen ableitbar sind.

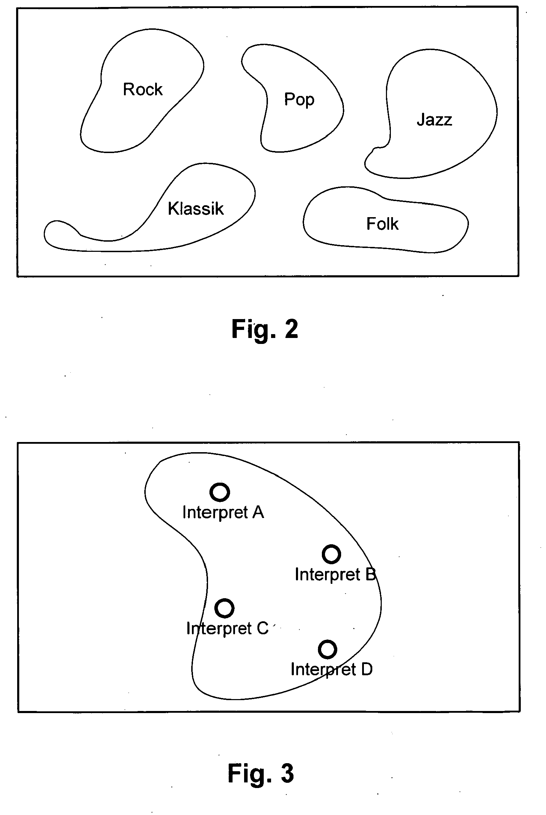

In einer Grundansicht (Fig. 2) der Musikauswahl sind zunächst nur die fünf Inseln sichtbar. Der Bediener kann dann eine Insel antippen und diese somit auswählen. Die Inseln stellen in der Grundansicht Auswahlsymbole im Sinne der Erfindung dar.

Die Anzeige wechselt nach der Auswahl einer Insel, im vorliegenden Beispiel der Insel "Pop", zu einer Inselansicht (Fig. 3), in welcher die Städte der Insel sichtbar sind. Eine Stadt ist jeweils als Kreis dargestellt. Unter dem Kreis steht der Name des Musikinterpreten, für den die Stadt steht. Der Bediener kann dann eine Stadt oder den Interpretennamen antippen und die Stadt bzw. den Interpreten somit auswählen. Kreis und Name stellen in der Inselansicht also gemeinsam ein Auswahlsymbol im Sinne der Erfindung dar.

Gemäß einer alternativen, hier nicht näher beschriebenen Ausführungsform der Erfindung ist für die unterste Ebene auch eine herkömmliche Listenauswahl oder eine Objektauswahl denkbar.

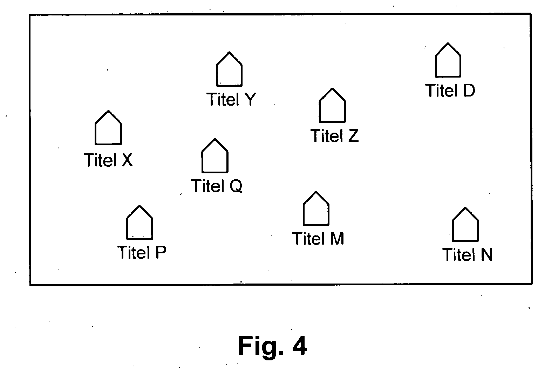

Nach der Auswahl einer Stadt wechselt die Anzeige zu einer Stadtansicht (Fig. 4), in welcher die Häuser der Stadt sichtbar sind. Jedes Haus ist durch ein Haussymbol dargestellt. Unter jedem Haussymbol steht der Name des Musikstückes, für welches das Haus steht. Der Bediener kann dann ein Haus oder den darunter stehenden Namen antippen und so das Haus bzw. das Musikstück auswählen. Haussymbol und Name stellen in der Stadtansicht also gemeinsam ein Auswahlsymbol im Sinne der Erfindung dar.

Zur Bedienung kann der Bediener im Musikauswahl-Modus unter anderem "Musikziele", dies können Namen von Musikstücken oder Interpreten sein, buchstabenweise textuell über Bedienelemente der Bedieneinrichtung 6 eingeben. Bei der textuellen Eingabe wird der Bediener genau wie bei der Eingabe von Navigationszielen durch einen "Speller" unterstützt, der nach Validierung bzw. Eingabe einer Zeichenkette alle mit dieser Zeichenkette beginnenden selektierbaren Interpreten bzw. Musikstücke aufzeigt. Der Bediener kann in der Inselansicht und der Stadtansicht auch durch die Auswahl von Bildbereichen auf dem Touchscreen in die jeweilige Insel- bzw. Stadtkarte ein- und auszoomen und kann Städte bzw. Häuser durch Antippen auf der angezeigten Insel- bzw. Stadtkarte auswählen.

Wie sich aus dem vorangehenden Absatz ergibt, erfolgt im Musikauswahl-Modus, insbesondere in der Inselansicht und der Stadtansicht, die Eingabe der auf die Musikkarte bezogenen Bedienbefehle bzw. Eingabedaten mittels der Bedienelemente in genau derselben Art und Weise wie die Eingabe der auf die Navigationskarte bezogenen Bedienbefehle bzw. Eingabedaten im Navigationsmodus.

Bedienbefehle des Bedieners werden teils unmittelbar von der zentralen Informationsverarbeitungseinheit 5 verarbeitet (beispielsweise Ein- und Auszoomen), teils an den Musikrechner 2 weitergeleitet (z. B. Auswahl eines Musikstücks). Der Musikrechner 2 veranlasst, dass ausgewählte Musikstücke durch die Musikanlage des Kraftfahrzeugs wiedergegeben werden.

Der Bediener hat im Musikauswahl-Modus auch die Möglichkeit, Musikrouten zu planen und musikalisch auf diesen zu "reisen". Hierzu gibt er, in exakt derselben Art und Weise wie bei der Eingabe eines Navigationsziels im Navigationsmodus, ein Routenziel ein. Außerdem gibt er einen Ausgangspunkt ein. Nach dieser Eingabe hat der Bediener, exakt wie bei der Planung einer Navigationsroute, die Möglichkeit, Routenkriterien einzustellen, etwa ob eine zügige oder sanfte Annäherung vom Ausgangspunkt zum Routenziel gewünscht ist.

Durch die in bei Musikauswahl und Navigation in gleicher Art und Weise erfolgende Bedienung kann selbst ein bezüglich der Musikauswahl ungeübter Bediener intuitiv mit der ihm angebotenen Benutzerschnittstelle umgehen bzw. sich sehr schnell und mühelos an diese gewöhnen. Eine eigene Bedienschnittstelle zur Musikauswahl muss nicht vorgesehen werden. Eine aufwändige listenbasierte Musikauswahl entfällt. Bedienelemente, die speziell für eine andere Form der Musikauswahl, etwa eine listenbasierte Musikauswahl, geeignet wären und nicht ohnehin zur Bedienung des Fahrzeugsnavigationssystems benötigt werden, können ebenfalls entfallen. So können im Kraftfahrzeug Kosten, Bauraum und Gewicht gespart werden. Ebenso wird ein ansprechenderes Interieur-Design ermöglicht.

Im oben beschriebenen Ausführungsbeispiel sind Musikrechner 2, Navigationsrechner 4 und zentrale Informationsverarbeitungseinheit 5 als getrennte Komponenten ausgeführt. Dies dient der Verdeutlichung der unterschiedlichen durch das Gesamtsystem umsetzbaren Aufgaben Navigation und Musikauswahl, trotz welcher die Bedienung erfindungsgemäß mittels ein und derselben Bedienelemente 6 und gemäß einer Weiterbildung der Erfindung sogar in ganz ähnlicher Art und Weise erfolgt. Im vorliegenden Beispiel können Musikrechner 2, Navigationsrechner 4 und zentrale Informationsverarbeitungseinheit 5 als verteilte Recheneinheit angesehen werden, welche Speichereinheit 3, Bedieneinrichtung 6 und Graphikdisplay 1 im Sinne der Erfindung miteinander verbindet.

Entsprechend einer anderen Weiterbildung der Erfindung dient im beschriebenen Ausführungsbeispiel auch das Graphikdisplay 1 zur Anzeige sowohl für die Navigation als auch für die Musikauswahl.

## Patentansprüche

1. Verfahren zur Auswahl eines Musikstücks aus einer Vielzahl von Musikstücken, die in einer mit einer Recheneinheit (5) verbundenen Speichereinheit (3) abgelegt sind, bei welchem mittels eines mit der Recheneinheit verbundenen Bedienelements (6) zumindest ein Teil der Musikstücke anhand von Auswahlobjekten auswählbar ist, welche die Musikstücke repräsentieren und durch eine mit der Recheneinheit (5) verbundene graphische Anzeigeeinheit (1) ausgegeben werden, wobei einem Bediener der Recheneinheit (5) durch die Anzeigeeinheit (1) eine landkartenähnliche Struktur dargestellt wird, in welche zumindest ein Teil der Auswahlobjekte eingebettet ist, wobei die Auswahlobjekte als typische Elemente einer Landkarte, insbesondere als Kontinente, Städte, Stadtteile, Straßen, Gebirge, Berge, Flüsse und / oder Häuser, ausgebildet sind und wobei bei Anwendung des Verfahrens in einem Kraftfahrzeug ein Bedienelement (6) des Kraftfahrzeugs, welches wahlweise auch zur Bedienung eines Fahrzeugnavigationssystems (4) des Kraftfahrzeugs verwendbar ist, zur Bedienung des Verfahrens verwendet wird.

2. Verfahren nach Anspruch 1, wobei die Eingabe von auf die landkartenähnliche Struktur bezogenen Eingabedaten mittels des Bedienelements (6) in derselben Art und Weise erfolgt wie die Eingabe geographiebezogener Eingabedaten bei dem Fahrzeugnavigationssystem (4).

3. Verfahren nach Anspruch 1 oder 2, wobei die landkartenähnliche Struktur über eine Anzeigeeinheit (1) dargestellt wird, die wahlweise zur Visualisierung von Ausgabedaten des Fahrzeugnavigationssystems (4) verwendbar ist.

4. Verfahren nach einem der Ansprüche 1 bis 3, wobei eine Auswahl mehrerer Musikstücke getätigt wird, indem eine Route durch die landkartenähnliche Struktur definiert wird.

5. Verfahren nach einem der Ansprüche 1 bis 4, wobei eine Auswahl mehrerer Musikstücke getätigt wird, indem ein Gebiet in der landkartenähnlichen Struktur definiert wird.

6. Verfahren nach einem der Ansprüche 1 bis 5, wobei die Form, Farbe oder Größe eines Auswahlobjekts abhängig von einem charakteristischen Parameter der zugeordneten Musikstücke gewählt wird.

7. Verfahren nach einem der Ansprüche 1 bis 6, wobei die Musikstücke zumindest teilweise hierarchisch organisiert sind, wobei einem übergeordneten Auswahlobjekt mehrere Musikstücke zuordenbar sind und wobei die Anzeige, insbesondere die Form, Farbe und/oder Größe, des übergeordneten Auswahlobjekts abhängig von der Anzahl der dem übergeordneten Auswahlobjekt zugeordneten Musikstücke angepasst wird.

## Claims

1. A method for selecting a piece of music from a plurality of pieces of music which are stored in a memory unit (3) connected to a computing unit (5), in which method at least some of the pieces of music can be selected by means of an operating element (6) connected to the computing unit on the basis of selection objects which represent the pieces of music and which are output by a graphic display unit (1) connected to the computing unit (5), wherein an operator of the computing unit (5) is presented by the display unit (1) with a geographical map-like structure in which at least some of the selection objects are embedded, wherein the selection objects are formed as typical elements of a geographical map, more especially as continents, cities, districts, roads, mountains, hills, rivers and/or houses, and wherein, when the method is applied in a motor vehicle, an operating element (6) of the motor vehicle, which can also be used optionally to operate a vehicle navigation system (4) of the motor vehicle, is used to operate the method.

2. A method according to claim 1, wherein input data based on the geographical map-like structure is input by means of the operating element (6) in the same way in which geography-related input data is input in the vehicle navigation system (4).

3. A method according to claim 1 or 2, wherein the geographical map-like structure is displayed via a display unit (1) which can be used optionally to visualise output data of the vehicle navigation system (4).

4. A method according to any one of claims 1 to 3, wherein a selection of a number of pieces of music is made by defining a route by the geographical map-like structure.

5. A method according to any one of claims 1 to 4, wherein a selection of a number of pieces of music is made by defining an area in the geographical map-like structure.

6. A method according to any one of claims 1 to 5, wherein the shape, colour or size of a selection object is selected depending on a characteristic parameter of the associated pieces of music.

7. A method according to any one of claims 1 to 6, wherein the pieces of music are organised hierarchically at least in part, wherein a superordinate selection object can be associated with a number of pieces of music, and wherein the display, more especially the shape, colour and/or size, of the superordinate selection object is adapted depending on the number of pieces of music associated with the superordinate selection object.

## Revendications

1. Procédé de sélection d'un morceau de musique parmi un ensemble de morceaux de musique qui ont été déposés dans une unité de mémoire (3) reliée à une unité de calcul (5), selon lequel, au moyen d'un élément de manoeuvre (6) relié à l'unité de calcul, on peut sélectionner au moins une partie des morceaux de musique, à l'aide d'objets de sélection qui représentent les morceaux de musique et sont délivrés par une unité d'affichage graphique (1) reliée à l'unité de calcul (5), à un utilisateur de l'unité de calcul (5) étant représentée par l'unité d'affichage (1) une structure similaire à une carte géographique dans laquelle au moins une partie des objets de sélection est insérée, les objets de sélection étant réalisés sous la forme d'éléments typiques d'une carte géographique, en particulier de continents, de villes, de parties de villes, de rues, de montagnes, de collines, de fleuves et/ou de maisons, et, lors de la mise en oeuvre du procédé dans un véhicule, un élément de manoeuvre (6) de ce véhicule qui peut également sélectivement être utilisé pour manoeuvrer un système de navigation (4) du véhicule est utilisé pour la mise en oeuvre du procédé.

2. Procédé conforme à la revendication 1,
selon lequel l'entrée de données d'entrée concernant la structure similaire à une carte géographique au moyen de l'élément de manoeuvre (6) est effectué de la même façon que l'entrée de données d'entrée géographiques dans le système de navigation (4) du véhicule.

3. Procédé conforme à la revendication 1 ou 2,
selon lequel la structure similaire a une carte géographique est représentée sur une unité d'affichage (1) qui peut sélectivement être utilisée pour visualiser des données de sortie du système de navigation (4) du véhicule.

4. Procédé conforme à l'une des revendications 1 à 3,
selon lequel une sélection de plusieurs morceaux de musique est effectuée en définissant un itinéraire au travers de la structure similaire à une carte géographique.

5. Procédé conforme à l'une des revendications 1 à 4,
selon lequel une sélection de plusieurs morceaux de musique est effectuée en définissant un domaine dans la structure similaire à une carte géographique.

6. Procédé conforme à l'une des revendications 1 à 5,
selon lequel la forme, la couleur ou la dimension d'un objet de sélection est choisie en fonction d'un paramètre caractéristique du morceau de musique associé.

7. Procédé conforme à l'une des revendications 1 à 6,
selon lequel les morceaux de musique sont au moins en partie organisés selon une hiérarchie, à un objet de sélection supérieur pouvant être associés plusieurs morceaux de musique, et l'affichage, en particulier la forme, la couleur et/ou la dimension de l'objet de sélection supérieure étant adapté en fonction du nombre des morceaux de musique associés à l'objet de sélection supérieur.
